# EUROPÄISCHE PATENTSCHRIFT

(11) **EP 1 998 985 B1**
(45) Veröffentlichungstag und Bekanntmachung des Hinweises auf die Patenterteilung: **27.04.2011**
(21) Anmeldenummer: 07723582.8
(22) Anmeldetag: 26.03.2007
(51) Int. Cl.: B60R 22/12, G01L 5/10

(54) **SICHERHEITSGURT-EINRICHTUNG FÜR EIN KRAFTFAHRZEUG**
SEATBELT DEVICE FOR A MOTOR VEHICLE
DISPOSITIF DE CEINTURE DE SECURITE POUR VEHICULE AUTOMOBILE

(30) Priorität: 28.03.2006 DE 102006014668
(43) Veröffentlichungstag der Anmeldung: 10.12.2008
(73) Patentinhaber: Autoliv Development AB, 447 83 Vårgårda (SE)
(72) Erfinder: MUELLER, Kai-Stephan, 25524 Oelixdorf (DE); VAN NEER, Richard, NL-5216 Hertogenbosch (NL); ZELLMER, Harald, 22869 Schenefeld (DE); LANGHOFF, Hans-Jörg, 25474 Bönningstedt (DE); PIEPER, Dirk, 20253 Hamburg (DE)
(74) Vertreter: Schön, Thilo
(86) Internationale Anmeldenummer: PCT/EP2007/002635
(87) Internationale Veröffentlichungsnummer: WO 2007/112874

(56) Entgegenhaltungen:
- DE-A1- 4 211 672
- US-A- 5 472 235

## Beschreibung

### Technisches Gebiet der Erfindung

Die Erfindung betrifft eine Sicherheitsgurt-Einrichtung für ein Kraftfahrzeug nach Anspruch 1, sowie ein Verfahren zur Herstellung einer Sicherheitsgurt-Einrichtung nach Anspruch 12.

### Stand der Technik

In der DE 100 26 444 A1 ist eine Sicherheitsgurt-Einrichtung mit einem Gurtband beschrieben, wobei eine Detektionseinrichtung vorhanden ist, mit deren Hilfe man sowohl die im Gurtband herrschende Zugkraft als auch die Gurtauszugslänge messen kann. Die Detektionseinrichtung weist einen sich über die gesamte Länge des Gurtbandes mäandrierend erstreckenden elektrischen Leiter und eine Auswerteeinrichtung auf. Der mäandrierend verlaufende elektrische Leiter dient in erster Linie als Dehnungsmessstreifen, wodurch die Dehnung des Gurtbandes und somit auch die in ihm herrschenden Zugkräfte gemessen werden können. Unter Verwendung dieses mäandrierend verlaufenden elektrischen Leiters ist es auch möglich, die Gurtauszugslänge zu messen, indem man beispielsweise im oder am Gurtaufroller ein induktiv arbeitendes Zählelement anordnet, welches die Anzahl der an ihm vorbeilaufenden Mäanderschleifen zählt.

Nachteilig an diesem Stand der Technik ist es insbesondere, dass ein mäandrierend verlaufender elektrischer Leiter im oder am Gurtband angeordnet werden muss, was sehr aufwendig ist. Ein weiterer Nachteil ist, dass die Messgenauigkeit hinsichtlich der im Gurtband herrschenden Zugkraft mit abnehmender Elastizität des Gurtbandes ebenfalls abnimmt.

Aus der gattungsbildenden DE 42 11 672 A1 ist ein aufblasbarer Sicherheitsgurt bekannt, dessen zündbares Material mittels aus einem Lichtleiter austretendem Licht gezündet wird.

### Gegenstand der Erfindung

Hiervon ausgehend hat sich zunächst die Aufgabe gestellt, eine Sicherheitsgurt-Einrichtung, wie sie in der DE 100 26 444 A1 beschrieben ist, dahingehend weiterzubilden, dass die Herstellung des Gurtbandes vereinfacht wird und dass eine hohe Messgenauigkeit erzielt werden kann.

Es hat sich herausgestellt, dass man den elektrischen Leiter durch wenigstens einen Lichtleiter ersetzten kann, welcher in das Gurtband eingewoben ist und der mit einem lichtaussendenden undeinem lichtempfindlichen Element verbunden ist. Hierbei erstreckt sich der Lichtleiter vorzugsweise entlang der Kettfäden, d.h., geradlinig in Längsrichtung des Gurtbandes. Zur Messung der interessierenden Größen wird der Umstand ausgenutzt, dass Lichtleiter, beispielsweise Glasfasern, ihre optischen Eigenschaften unter mechanischer Beanspruchung, insbesondere unter Krümmung, aber auch unter Druck und/oder Zug verändern und insbesondere der Lichtverlust in einem Lichtleiterabschnitt bei gegebener Wellenlänge, gegebenem Lichtleitermaterial, gegebenem Querschnitt und gegebener Oberflächenstruktur vom Krümmungsradius dieses Leiterabschnittes abhängt. Aber auch andere Effekte, welche Lichtleiter unter mechanischer Belastung zeigen, wie Änderung der Phasenverschiebung, Änderung der Polarisation und Änderung der Dispersion stehen zur Bestimmung des Gurtbandzustandes zur Verfügung.

Eine Möglichkeit besteht darin, den Lichtverlust im Lichtleiter zu messen. Der überwiegende Anteil des Lichtverlustes resultiert nicht aus Absorption sondern aus dem Austreten von Licht aus dem Lichtleiter. Dieser Effekt kann außer zu Messzwecken auch zur Informationsübermittlung an den Benutzer ausgenutzt werden. Hierzu muss die aus dem Lichtleiter austretende Lichtmenge so groß sein, dass sie vom Insassen zumindest bei Nacht wahrgenommen werden kann. So kann beispielsweise durch ein rot aufleuchtendes Gurtband zusätzlich zu einem weiteren Warnhinweis auf eine Störung des Kraftfahrzeugs oder auf Erreichen einer kritischen Außentemperatur hingewiesen werden. Ebenso ist es zum Beispiel denkbar, durch ein grün aufleuchtendes Gurtband ein korrektes Anschnallen zu bestätigen. Ferner wird durch die Lichtabgabe das Auffinden des Gurtbandes erleichtert.

Es wird deshalb gemäß Anspruch 1 vorgeschlagen, wenigstens zwei Lichtleiter in das Gurtband einzuweben und einen Lichtleiter mit einem lichtaussendenden Element und einen Lichtleiter mit einem lichtempfindlichen Element optisch zu verbinden.

Weiter vorzugsweise sind in diesem Fall lichtaussendendes Element und lichtempfindliches Element nicht nur über den durch das Gurtband verlaufenden Lichtleiter, sondern zusätzlich über einen weiteren Lichtleiter, welcher als Referenzmessstrecke dient, verbunden. Wählt man diese Anordnung, so kann neben dem Intensitätsverlust des im Gurtband verlaufenden Lichtleiters auch eine Änderung der Polarisation und/oder der Phasenverschiebung und/oder Laufzeitunterschiede gemessen werden.

Sollen der oder die Lichtleiter dazu dienen, eine wahmehmbare Menge Licht abzugeben, muss dafür gesorgt werden, dass eine ausreichende Lichtmenge austritt. Dies kann beispielsweise dadurch erreicht werden, dass die Oberfläche des Lichtleiters zumindest abschnittsweise angeschliffen oder angeraut ist, oder dass mehrere Lichtleiter unterschiedlicher Länge verwendet werden, wobei die Lichtleiter an unterschiedlichen Stellen des Gurtbandes enden.

Es kann häufig günstig sein, Lichtleiter einzusetzen, die über ihre Länge unterschiedliche Eigenschaften aufweisen. So ist es beispielsweise möglich, an mehreren Stellen des Lichtleiters Bragg-Gitter auf die Oberfläche einzuätzen. Die bragg-Gitter an unterschiedlichen Stellen haben unterschiedliche Bragg-Wellenlängen, so dass Licht unterschiedlicher Wellenlänge an unterschiedlichen Stellen des Lichtleiters reflektiert wird. Dies kann dazu verwendet werden zu bestimmen, an welcher Stelle das Gurtband an der Gurtzunge oder am Umlenker umgelenkt wird.

Unter Licht wird hier jede elektromagnetische Strahlung verstanden, welche sich in einem Lichtleiter, beispielsweise einem Glasfaserkabel, leiten lässt, wobei es beim Einsatz des Lichtleiters zu reinen Messzwecken unerheblich ist, ob die elektromagnetische Strahlung vom menschlichen Auge wahrnehmbar ist, oder nicht.

Um eine zu starke Auskopplung von Licht im Bereich der Gurtzunge und des Umlenkers (soweit vorhanden), wo das Gurtband mit relativ kleinen Radien umgelenkt wird, zu vermeiden, sollten die dort auftretenden Radien eine gewisse Mindestgröße nicht unterschreiten.

In Anspruch 12 ist ein Verfahren zur Herstellung einer Sicherheitsgurt-Einrichtung angegeben.

Die Erfindung wird nun anhand von Ausführungsbeispielen näher erläutert. Hierbei zeigen:

### Kurzbeschreibung der Zeichnungen

- Figur 1: Eine Sicherheitsgurt-Einrichtung und einen auf einem Sitz sitzenden, mit der Sicherheitsgurt-Einrichtung gesicherten Insassen,
- Figur 2: eine Prinzipdarstellung einer Detektionseinrichtung gemäß einem ersten Ausführungsbeispiel,
- Figur 3: eine Prinzipdarstellung einer Detektionseinrichtung gemäß einem zweiten Ausführungsbeispiel,
- Figur 4: eine Prinzipdarstellung einer Detektionseinrichtung gemäß einem dritten Ausführungsbeispiel,
- Figur 5: eine Prinzipdarstellung der Gewebestruktur eines Gurtbandes mit eingewobenem Lichtleiter,
- Figur 6: eine Gurtzunge
- Figur 7: einen Schnitt entlang der Ebene C-C aus Figur 6,
- Figur 8: eine Prinzipdarstellung eines ersten Ausführungsbeispiels eines In- formationsgebers und
- Figur 9: eine Prinzipdarstellung eines zweiten Ausführungsbeispiels eines Informationsgebers.
- Figuren 10-12: eine erste bevorzugte Methode zur Einringung eines Lichtwellenlei- ters in ein Gurtband,
- Figuren 13-15: eine zweite bevorzugte Methode zur Einringung eines Lichtwellen- leiters in ein Gurtband,

### Beschreibung bevorzugter Ausführungsformen

Wie bereits erwähnt, hat die Erfindung zwei Ausführungsformen: Bei der ersten Ausführungsform ist der ins Gurtband eingewobene Lichtleiter - beispielsweise ein Glasfaserkabel - Teil einer Messeinrichtung. Bei der zweiten Ausführungsform ist der ins Gurtband eingewobene Lichtleiter Teil eines Informationsgebers.

### Erste Ausführungsform

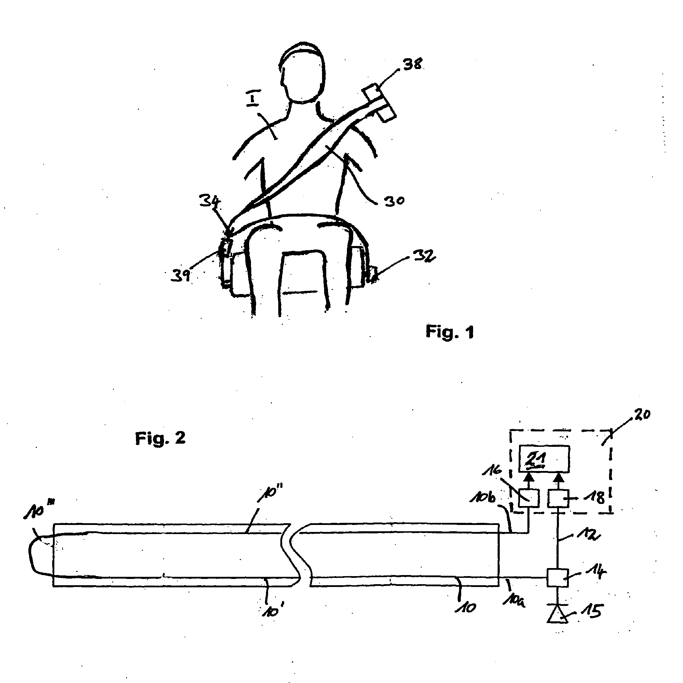

Die Figur 1 zeigt eine Sicherheitsgurt-Einrichtung im bestimmungsgemäßen Gebrauch. Von einem sich auf Schulter- oder Kopfhöhe des Insassen 1 befindenden Aufroller 38 erstreckt sich das Gurtband 30 zunächst bis zur Gurtzunge 34, welche im Gurtschloss 39 eingesteckt ist, und von da bis zum Endbeschlag 32. Aufroller 38 und Endbeschlag 32 dienen hier als Befestigungselemente. Die Sicherheitsgurt-Einrichtung weist eine Detektionseinrichtung auf, mit deren Hilfe man sowohl die Gurtauszugslänge, als auch die während eines Unfalls im Gurtband 30 herrschende Zugkraft bestimmen kann. Ein erstes Ausführungsbeispiel einer solchen Detektionseinrichtung ist in Figur 2 schematisch dargestellt:

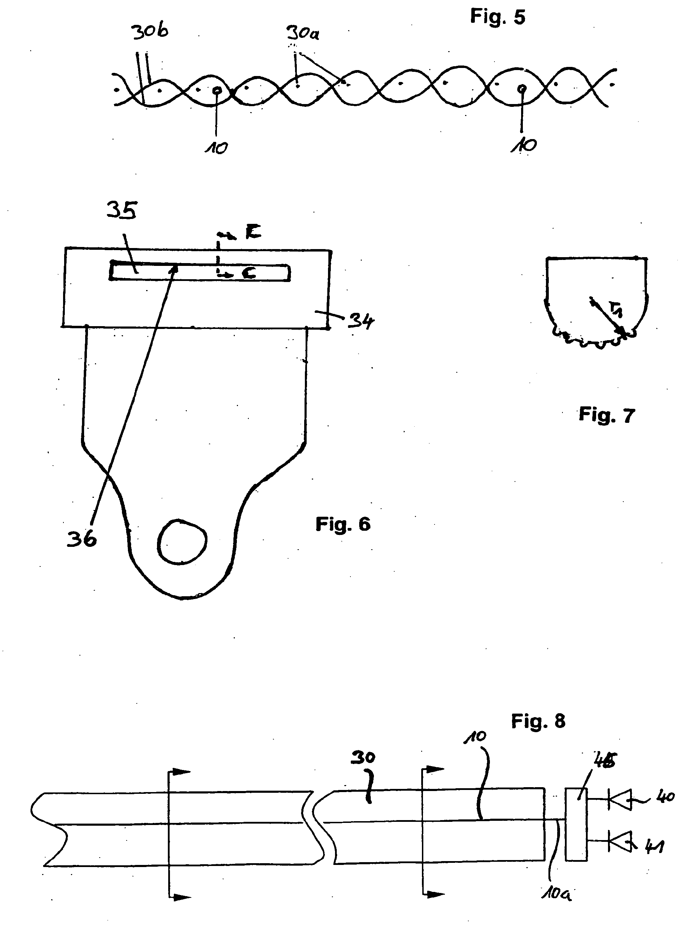

Die Detektionseinrichtung weist einen ersten Lichtwellenleiter 10 auf, dessen beide Enden 10a,10b aus dem mit dem Endbeschlag 32 verbundenen Ende des Gurtbandes 30 ragen. Von hier aus erstrecken sich zwei parallel zueinander verlaufende Hauptabschnitte 10' und 10" des ersten Lichtwellenleiters im wesentlichen über die gesamte Gurtbandlänge und sind im aufrollerseitigen Endbereich des Gurtbandes 30 über den Verbindungsabschnitt 10"', der sich vorzugsweise außerhalb des Gurtbandes befindet, miteinander verbunden. Die beiden Hauptabschnitte 10',10" sind, wie die Figur 5 schematisch zeigt, parallel zu den Kettfäden 30a in das Gurtband 30 eingewoben. Der Lichtwellenleiter ist hierbei von den Schußfäden zumindest abschnittsweise abgedeckt, so dass es insbesondere in den Umlenkpunkten gegen äußere Einflüsse wie Abrieb, Verschmutzung oder übermäßige Knickbelastung geschützt ist.

Das von der Laserdiode 15 erzeugte Licht gelangt zunächst in den Strahlteiler 14 und wird dort in zwei Teilstrahlen geteilt. Der erste Teilstrahl wird in das erste Ende 10a des Lichtwellenleiters 10 eingekoppelt, während der zweite Teilstrahl in den zweiten Lichtwellenleiter 12 eingekoppelt wird. Beide Lichtwellenleiter 10,12 sind jeweils mit einer Photozelle 16,18 verbunden, welche ihr Signal an eine Auswerteeinheit 20 weitergeben. Durch Vergleich der von den beiden Photozellen 16,18 kommenden Signale kann die Auswerteeinheit 20 den Lichtverlust im ersten Lichtwellenleiter 10 bestimmen und somit Rückschlüsse auf den Zustand des Gurtbandes ziehen.

Grundsätzlich ist es auch möglich, dass die beiden Enden des Lichtwellenleiters aus unterschiedlichen Enden des Gurtbandes austreten. Dies würde es jedoch notwendig machen, dass sich entweder das lichtaussendende Element - hier die Laserdiode 15 - oder das lichtempfindliche Element - hier die Photozelle 16 - im sich drehenden Gurtaufroller angeordnet wäre, was relativ aufwendig wäre.

Lichtverluste treten in erster Linie an der Gurtzunge 34, wo das Gurtband durch die Umlenkkante 36 einer Öse 35 mit einem relativ geringen Durchmesser r₁ umgelenkt wird (siehe hierzu Figuren 6 und 7), und im Bereich des Aufrollers 38 auf. Der Lichtverlust an der Umlenkkante hängt von der im Gurtband herrschenden Kraft ab.

Befindet sich das Gurtband im aufgerollten Zustand, so ist ein großer Teil des Gurtbandes auf dem Aufroller 38 aufgerollt. Das bedeutet, dass das durch den ersten Lichtwellenleiter 10 geleitete Licht im Bereich des Aufrollers 38 eine Spiralbahn mit einer bestimmten Wicklungszahl beschreibt. Die Dicke des ersten Lichtwellenleiters 10 in diesem Bereich und sein Material ist so gewählt, dass der Lichtwellenleiter 10 bei jeder Wicklung eine messbare Menge Licht verliert. Wird das Gurtband ausgezogen, verringert sich die Wicklungszahl und der Lichtverlust wird kleiner. Dies wird von der ersten Photozelle 16 gemessen und von der Recheneinheit 21 in eine Gurtauszugslänge umgerechnet. Die Photozellen und die Recheneinheit bilden hier zusammen die Auswerteeinheit 20.

Befindet sich der Insasse im angeschnallten Zustand, bleibt der Lichtverlust im wesentlichen konstant. Dies ändert sich drastisch, wenn hohe Zugspannung im Gurtband während eines Unfalles auftreten. Hierbei wird das Gurtband und somit auch der erste Lichtwellenleiter 10 insbesondere an der Umlenkkante der Gurtzunge 34 stark verformt, so dass der Lichtverlust sprunghaft ansteigt. Dieser sprunghafte Anstieg ist ein Maß für die auftretende Zugkraft, so dass die Recheneinheit 21 die Gurtkraft anhand von Eichkurven errechnen kann. Um diesen Effekt noch zu vergrößern, ist es möglich an der Umlenkkante 36 Querrippen vorzusehen, wie dies in der Figur 7 dargestellt ist.

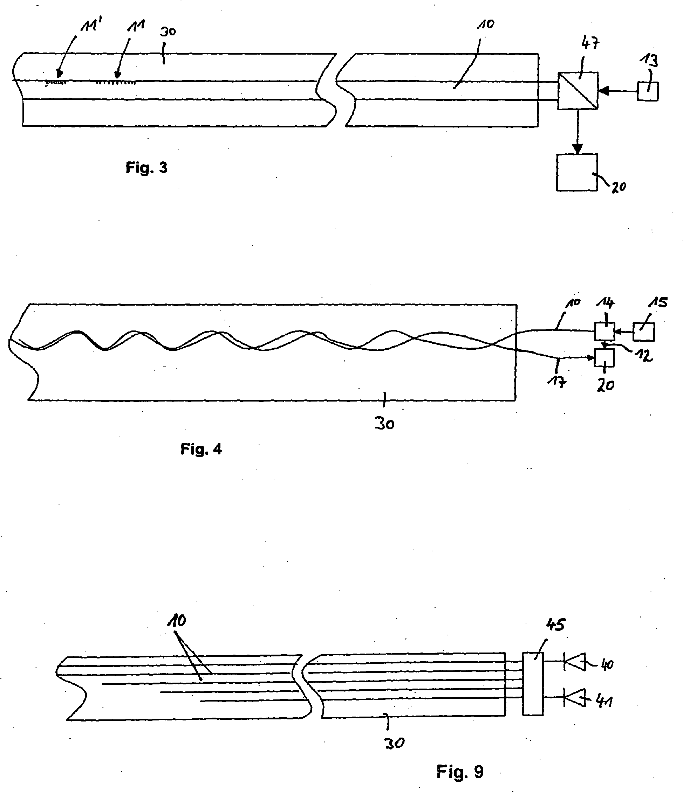

Die Figur 3 zeigt ein zweites Ausführungsbeispiel. Hier wird von einer kontinuierlich arbeitenden Lichtquelle 13 mit einem breitbandigen Spektrum Licht in den ersten Lichtwellenleiter 10 eingekoppelt, welches in den Bereichen, in denen das Gurtband bei einem angeschnallten Insassen an der Gurtzunge und gegebenenfalls an einem Umlenker umgelenkt wird, mehrere durch Ätzen der Oberfläche erzeugte Bragg-Gitter 11 und 11', von denen hier nur zwei dargestellt sind, aufweist. Die Bragg-Gitter an unterschiedlichen Stellen des ersten Lichtwellenleiters 10 haben unterschiedliche Bragg-Wellenlängen, so dass das von der breitbandigen Lichtquelle kommende Licht an unterschiedlichen Stellen des Lichtwellenleiter reflektiert wird. Das reflektierte Licht wird mittels Auskopplers 47 ausgekoppelt und der Auswerteeinheit 20 zugeführt, welche eine Spektralanalyse durchführt.

Kommt eines der Bragg-Gitter auf einer Umlenkkante zu liegen, ändert sich durch die starke Biegung das Reflexionsverhalten des betreffenden Bragg-Gitters in der Regel dahingehend, dass die Reflexion abnimmt. Hierdurch sinkt die an der Auswerteeinheit 20 ankommende spektrale Intensität der betreffenden Wellenlänge, welche von der Auswerteeinheit 20 bestimmt wird. Da die Wellenlänge unmittelbar mit einem bestimmten Bragg-Gitter und somit auch zu einer bestimmten Stelle des mit dem Gurtband verwobenen Lichtwellenleiters korrespondiert, lässt sich somit die relative Position des Gurtbandes sowohl bezüglich der Gurtzunge als auch bezüglich des Umlenkers bestimmen.

Die Figur 4 zeigt ein drittes Ausführungsbeispiel. Hier wird Licht gepulst von der Laserdiode 15 in den ersten Lichtwellenleiter 10 eingekoppelt. Dieser erste Lichtwellenleiter ist mit dem lichtempfangenden Lichtwellenleiter 11 verdrillt und die beiden Lichtwellenleiter sind gemeinsam mit dem Gurtband 30 verwoben. Tritt an einer Knickstelle Licht aus dem ersten Lichtwellenleiter 10 aus, so gelangt ein Teil dieses Lichtes in den lichtempfangenden Lichtwellenleiter 11 und gelangt von da in die Auswerteeinheit. Durch direkte oder indirekte Messung der Laufzeit kann auf den Ort der Knickstelle oder der Knickstellen und somit auf die relative Lage des Gurtbandes bezüglich der Gurtzunge und eines gegebenenfalls vorhandenen Umlenkers geschlossen werden. Es können Bereiche vorgesehen sein, in denen der Lichtübertritt vom ersten Lichtwellenleiter 10 in den lichtempfangende Lichtwellenleiter 17 erleichtert ist. Solche Bereiche sind dort vorzusehen, wo das Gurtband bei angeschnalltem Insassen umgelenkt wird, also auf Höhe der Gurtzunge und (falls vorhanden) auf Höhe des Umlenkers. In diesen Bereichen können beispielsweise die Oberflächen der Lichtwellenleiter aufgerauht sein.

Grundsätzlich ist es möglich, zusätzlich oder alternativ zum reinen totalen oder spektralen Intensitätsverlust auftretende Phasenverschiebungen oder Polarisationsänderungen zu messen. Insbesondere, wenn die Messung der Polarisation zur Bestimmung des Gurtband-Zustandes herangezogen werden soll, ist der Einsatz von Monomode-Lichtwellenleitern zu bevorzugen, werden Intensitätsveränderungen oder Laufzeitveränderungen gemessen, ist der Einsatz von Multimodelichtwellenleitern in der Regel ausreichend. Weisen die Lichtwellenleiter Enden auf, die nicht mit einer Lichtquelle oder einem Detektor verbunden sind, so können diese bedarfsweise offen oder verspiegelt sein.

### Zweite Ausführungsform

Mit Bezug auf die Figur 8 wird ein Beispiel für das zweite Einsatzgebiet eines in ein Gurtband 30 eingewobenen ersten Lichtwellenleiters 10 gegeben. Hier dient der Lichtwellenleiter 10 nicht als Teil einer Messeinrichtung, sondern als Teil eines Informationsgebers. Das erste Ende 10a des ersten Lichtwellenleiters 10 ist mit einem Lichtkopplungselement 45 verbunden, in welches die beiden Leuchtdioden 40 und 41 einstrahlen können. Die beiden Leuchtdioden 40,41 haben unterschiedliche Farben, beispielsweise rot und grün. Ein erster Abschnitt des ersten Lichtwellenleiters, welcher sich im Anschnallzustand etwas über die Gurtzunge 34 hinaus erstreckt, weist eine polierte Oberfläche auf, so dass es hier kaum zu Lichtaustritt kommt. Der sich hieran anschließende zweite Abschnitt weist eine aufgerauhte Oberfläche auf, so dass es zu einem gewissen Lichtverlust kommt. Die Leuchtstärke der beiden Leuchtdioden 40,41 ist so gewählt, dass das aus dem zweiten Abschnitt des ersten Lichtwellenleiters 10 austretende Licht zumindest bei Nacht durch den Benutzer wahrgenommen wird, oder unter Zuhilfenahme einer Detektionseinrichtung erkennbar ist. Somit kann erreicht werden, dass der Schulterabschnitt des Gurtbandes rot oder grün leuchtet, womit dem Benutzer Informationen mitgeteilt werden können. Insbesondere kann ein rotes Aufleuchten des Gurtbandes als Warnung für eine Störung eingesetzt werden.

Es versteht sich, dass auch Ausführungsbeispiele mit nur einem lichtaussendendnen Element möglich sind, wobei in diesem Fall durch die Informationen "Licht an" und "Licht aus" der ordnungsgemäße Anschnallzustand erkennbar ist.

Figur 9 zeigt ein alternatives Ausführungsbeispiel. Hier sind mehrere erste Lichtwellenleiter 10 unterschiedlicher Länge vorgesehen, wobei der Lichtaustritt ganz oder zum überwiegenden Teil an den zweiten Enden der Lichtwellenleiter erfolgt. Diese zweiten Enden befinden sich an unterschiedlichen Stellen des Gurtbandes. Ferner ist durch die Ein- oder Auskopplung von Licht an den Enden der Lichtwellenleiter unterschiedlicher Länge eine einfache Möglichkeit geschaffen, einen Rückschluss auf die vorhandene Gurtbandgeometrie und/oder Gurtbandauszugslänge zu ziehen.

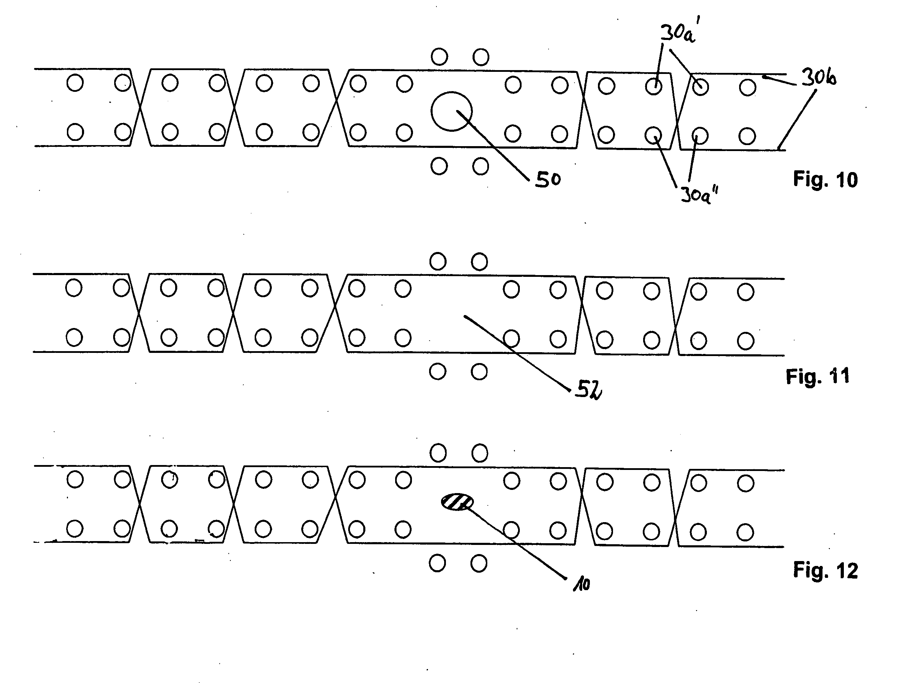

Die Figuren 10 bis 12 zeigen ein bevorzugtes Verfahren zum Einbringen des Lichtleiters 10 in das Gurtband 30. Das Gurtband 30 ist aus Kettfäden 30a und Schussfäden 30b gewoben, wobei hier zwei Lagen von Kettfäden 30a' und 30a" vorhanden sind.

Hierbei sind über den größten Teil der Breite des Gurtbandes 30 jeweils ein Block von vier Kettfäden 30a, also zwei obere Kettfäden 30a' und zwei untere Kettfäden 30a" von den beiden Schussfäden 30b umgeben. An der Stelle, an der sich später der Lichtwellenleiter 10 erstrecken soll, ändert sich Webstruktur derart, dass die oberen und unteren Kettfäden 30a',30a" durch die Schussfäden 30b voneinander getrennt sind, so dass ein Hohlraum entsteht. Zur Unterstützung der Hohlraumbildung befindet sich an der entsprechenden Stelle während des Webprozesses vorzugsweise ein Lichtlwellenplatzhalter 50, wie dies in Figur 10 dargestellt ist. Nach Ende des Webprozesses wird dieser Lichtwellenplatzhalter 50 herausgezogen, so dass der Hohlraum 52 verbleibt, wie dies in Figur 11 dargestellt ist. In diesen Hohlraum 52 kann dann zu einem beliebigen späteren Zeitpunkt der Lichtwellenleiter 10 eingeschoben werden, wie dies in Figur 12 dargestellt ist. Vorzugsweise hat der Lichtwellenplatzhalter 50 einen größeren Durchmesser als der später eingeschobene Lichtwellenleiter 10, so dass dieser sich leicht in den Hohlraum 52 des Gurtbandes 30 hineinschieben lässt.

Das eben beschriebene Verfahren zur Erzeugung der in Figur 12 gezeigten Struktur ist zu bevorzugen, jedoch nicht zwingend. Es ist ebenso möglich, den Hohlraum 52 ohne einen Lichtwellenplatzhalter 50 zu erzeugen und es ist ebenso möglich, unmittelbar den Lichtwellenleiter 10 zu umweben. Wichtig ist jedoch, dass das Gurtband 30 am Ort des Lichtwellenleiters 10 seine Webstruktur ändert, damit ein entsprechender Hohlraum 52 entsteht. Das beschrieben Verfahren hat jedoch den Vorteil, dass eine Beschädigung des Lichtwellenleiters 10 während des Webprozesses ausgeschlossen werden kann.

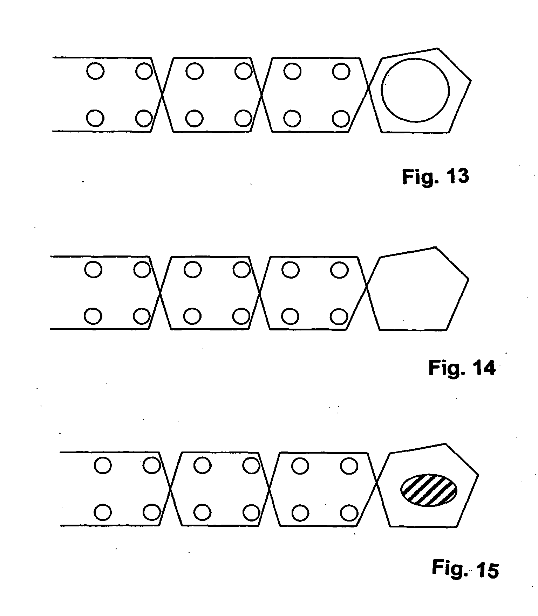

Die Figuren 13 bis 15 zeigen eine Alternative zum eben Gezeigten. Hier wird ein Hohlraum 52 an einer Kante des Gurtbandes 30 erzeugt, in dem ein Lichtwellenplatzhalter 50 vom Schussfaden 30b umschlossen wird. Auch hier ist es grundsätzlich möglich, den Lichtwellenleiter 10 unmittelbar einzuweben, jedoch ist auch hier zu bevorzugen, zunächst einen Lichtwellenleiterplatzhalter 50 vorzusehen, diesen später herauszuziehen, so dass der Hohlraum 52 entsteht und abschließend den Lichtwellenleiter 10 selbst einzuschieben. Es ist natürlich auch möglich, an beiden Kanten des Gurtbandes 30 einen Lichtwellenleiter 10 in dieser Art vorzusehen.

### Bezugszeichenliste

- 10: erster Lichtwellenleiter
- 10', 10": Hauptabschnitt
- 10"': Verbindungsabschnitt
- 10a: erstes Ende
- 10b: zweites Ende
- 11,11': Bragg-Gitter
- 12: zweiter Lichtwellenleiter
- 13: Lichtquelle
- 14: Strahlteiler
- 15: Laserdiode
- 17: lichtempfangender Lichtwellenleiter
- 16: erste Photozelle
- 18: zweite Photozelle
- 20: Auswerteeinheit
- 21: Recheneinheit
- 30: Gurtband
- 30a: Kettfaden
- 30b: Schussfaden
- 32: Endbeschlag
- 34: Gurtzunge
- 35: Öse
- 36: Umlenkkante
- 38: Aufroller
- 39: Gurtschloss
- 45: Lichtkopptungselement
- 47: Auskoppler

## Patentansprüche

1. Sicherheitsgurt-Einrichtung für ein Kraftfahrzeug mit einem Gurtband (30), welches mittels Befestigungseinrichtungen mit dem Fahrzeug verbunden ist, wobei mit dem Gurtband (30) wenigstens ein Lichtleiter (10) verbunden und mit einem lichtaussendenden Element optisch gekoppelt ist, wobei weiterhin ein lichtempfindliches Element vorhanden ist,
**dadurch gekennzeichnet, dass** das lichtaussendende Element und das lichtempfindliche Element mit getrennten Lichtleitern (10,17), die sich im wesentlichen parallel zueinander durch das Gurtband erstrecken, optisch verbunden sind.

2. Sicherheitsgurt-Einrichtung nach Anspruch 1, **dadurch gekennzeichnet, dass** die beiden Lichtwellenleiter miteinander verdrillt sind.

3. Sicherheitsgurt-Einrichtung nach einem der vorangehenden Ansprüche, **dadurch gekennzeichnet, dass** lichtaussendendes Element und lichtempfindliches Element weiterhin mittels eines weiteren Lichtleiters verbunden sind.

4. Sicherheitsgurt-Einrichtung nach einem der vorangehenden Ansprüche, **dadurch gekennzeichnet, dass** der im Gurtband verlaufende Lichtleiter eine nichtkonstante Oberflächenstruktur aufweist.

5. Sicherheitsgurt-Einrichtung nach einem der vorangehenden Ansprüche, **dadurch gekennzeichnet, dass** mehrere mit dem lichterzeugenden Element gekoppelte Lichtleiter mit dem Gurtband verbunden sind, wobei die Lichtleiter unterschiedliche Längen aufweisen.

6. Sicherheitsgurt-Einrichtung nach einem der vorangehenden Ansprüche, **dadurch gekennzeichnet, dass** das lichtaussendende Element ein breitbandiges Lichtspektrum aussendet.

7. Sicherheitsgurt-Einrichtung nach einem der vorangehenden Ansprüche, **dadurch gekennzeichnet, dass** der wenigstens eine Lichtleiter mit dem Gurtband verwoben ist und die im Gurtband verlaufenden Lichtleiterabschnitte zumindest abschnittsweise durch die Schußfäden des Gurtbandes abgedeckt sind.

8. Sicherheitsgurt-Einrichtung nach einem der Ansprüche 1 bis 6, **dadurch gekennzeichnet, dass** das Gurtband (30) aus Kett- und Schußfäden (30a',30a"; 30b) gewoben ist, wobei sich wenigstens ein Hohlraum (52) parallel zu den Kettfäden (30a',30a") erstreckt, in welchen wenigstens ein Lichtleiter (10) aufgenommen ist, wobei sich der Hohlraum (52) im Inneren des Gurtbandes (30) befindet.

9. Sicherheitsgurt-Einrichtung nach einem der Ansprüche 1 bis 6, **dadurch gekennzeichnet, dass** das Gurtband (30) aus Kett- und Schußfäden (30a', 30a"; 30b) gewoben ist, wobei sich wenigstens ein Hohlraum (52) parallel zu den Kettfäden (30a',30a") erstreckt, in welchen wenigstens ein Lichtleiter (10) aufgenommen ist, wobei sich der Hohlraum (52) an einer Kante des Gurtbandes (30) befindet.

10. Sicherheitsgurt-Einrichtung nach Anspruch 9, **dadurch gekennzeichnet, dass** sich an beiden Kanten des Gurtbandes Hohlräume befinden.

11. Sicherheitsgurt-Einrichtung nach Anspruch 10, **dadurch gekennzeichnet, dass** das Gurtband an der Stelle des Hohlraumes seine Webstruktur ändert.

12. Verfahren zur Herstellung einer Sicherheitsgurt-Einrichtung für ein Kraftfahrzeug, welche ein mit einem Lichtleiter (10) verbundenes Gurtband, welches mittels Befestigungseinrichtungen mit dem Fahrzeug verbunden ist, ein mit dem Lichtleiter (10) optisch gekoppeltes lichtaussendendes Element und ein lichtempfindliches Element aufweist, wobei das Gurtband (30) aus Kett- und Schußfäden (30a',30a"; 30b) gewobenen ist, wobei sich wenigstens ein Hohlraum (52) im Inneren des Gurtbandes parallel zu den Kettfäden (30a',30a") erstreckt, in welchen wenigstens ein Lichtleiter (10) aufgenommen ist,
**dadurch gekennzeichnet, dass** zur Erzeugung des wenigstens einen Hohlraums (52) ein Lichtleiter-Platzhalter (50) in das Gurtband eingewoben, anschließend entfernt und in den verbleibenden Holraum (50) der Lichtleiter (10) eingeschoben wird.

13. Verfahren nach Anspruch 12, **dadurch gekennzeichnet, dass** der Lichtleiter-Platzhalter (50) einen größeren Durchmesser (10) als der Lichtleiter hat.

## Claims

1. Seat belt device for a motor vehicle with a belt strap (30) which is connected with the vehicle by means of fastening devices, wherein connected with the belt strap (30) is at least one optical waveguide (10) optically coupled with a light- emitting element, wherein furthermore a light-sensitive element is present, **characterised in that** the light-emitting element and the light-sensitive element are optically connected with separate optical waveguides (10, 17) which extend substantially parallel to each other through the belt strap.

2. Seat belt device according to claim 1, **characterised in that** the two optical waveguides are twisted together.

3. Seat belt device according to any of the preceding claims, **characterised in that** the light-emitting element and light-sensitive element are furthermore connected by means of a further optical waveguide.

4. Seat belt device according to any of the preceding claims, **characterised in that** the optical waveguide running in the belt strap has an inconstant surface structure.

5. Seat belt device according to any of the preceding claims, **characterised in that** several optical waveguides coupled with the light-generating element are connected with the belt strap, wherein the optical waveguides have different lengths.

6. Seat belt device according to any of the preceding claims, **characterised in that** the light-emitting element emits a broad-band light spectrum.

7. Seat belt device according to any of the preceding claims, **characterised in that** at least one optical waveguide is interwoven into the belt strap and the optical waveguide portions running in the belt strap are covered at least in sections by the weft threads of the belt strap.

8. Seat belt device according to any one of claims 1 to 6, **characterised in that** the belt strap (30) is woven from warp and weft threads (30a', 30a"; 30b) wherein at least one cavity (52) extends parallel to the warp threads (30a', 30a") and holds at least one optical waveguide (10), wherein the cavity (52) is located in the interior of the belt strap (30).

9. Seat belt device according to any one of claims 1 to 6, **characterised in that** the belt strap (30) is woven out of warp and weft threads (30a', 30a"; 30b) wherein at least one cavity (52) extends parallel to the warp threads (30a', 30a") and holds at least one optical waveguide (10), wherein the cavity (52) is located at the edge of the belt strap (30).

10. Seat belt device according to claim 9, **characterised in that** cavities are present on both edges of the belt strap.

11. Seat belt device according to claim 10, **characterised in that** the weave structure of the belt strap changes at the location of the cavity.

12. Method for production of a seat belt device for a motor vehicle which comprises a belt strap connected with an optical waveguide (10), which strap is connected with the vehicle by means of fastening devices and comprises a light-emitting element optically coupled with the optical waveguide (10) and a light-sensitive element, wherein the belt strap (30) is woven from warp and weft threads (30a', 30a"; 30b), wherein at least one cavity (52) extends in the interior of the belt strap parallel to the warp threads (30a', 30a") and holds at least one optical waveguide (10), **characterised in that** to create at least one cavity (52), an optical waveguide spacer (50) is woven into the belt strap, then removed and the optical waveguide (10) then inserted in the cavity (50) remaining.

13. Method according to claim 12, **characterised in that** the optical waveguide spacer (50) has a greater diameter (10) than the optical waveguide.

## Revendications

1. Dispositif de ceinture de sécurité pour un véhicule automobile avec une bande de ceinture (30), qui est attachée au véhicule au moyen de dispositifs de fixation, dans lequel au moins un guide de lumière (10) est assemblé à la bande de ceinture (30) et est couplé optiquement à un élément émetteur de lumière, dans laquelle il se trouve en plus un élément sensible à la lumière, **caractérisé en ce que** l'élément émetteur de lumière et l'élément sensible à la lumière sont reliés optiquement par des guides de lumière séparés (10, 17), qui s'étendent essentiellement parallèlement l'un à l'autre à travers la bande de ceinture.

2. Dispositif de ceinture de sécurité selon la revendication 1, **caractérisé en ce que** les deux guides de lumière sont torsadés l'un avec l'autre.

3. Dispositif de ceinturé de sécurité selon l'une quelconque des revendications précédentes, **caractérisé en ce que** l'élément émetteur de lumière et l'élément sensible à la lumière sont en outre reliés au moyen d'un autre guide de lumière.

4. Dispositif de ceinture de sécurité selon l'une quelconque des revendications précédentes, **caractérisé en ce que** le guide de lumière s'étendant dans la bande de ceinture présente une structure de surface non constante.

5. Dispositif de ceinture de sécurité selon l'une quelconque des revendications précédentes, **caractérisé en ce que** plusieurs guides de lumière couplés avec l'élément émetteur de lumière sont assemblées à la bande de ceinture, les guides de lumière présentant des longueurs différentes.

6. Dispositif de ceinture de sécurité selon l'une quelconque des revendications précédentes, **caractérisé en ce que** l'élément émetteur de lumière émet un spectre lumineux à large bande.

7. Dispositif de ceinture de sécurité selon l'une quelconque des revendications précédentes, **caractérisé en ce que** ledit au moins un guide de lumière est tissé avec la bande de ceinture et les sections de guide de lumière s'étendant dans la bande de ceinture sont masquées au moins partiellement par les fils de trame de la bande de ceinture.

8. Dispositif de ceinture de sécurité selon l'une quelconque des revendications 1 à 6, **caractérisé en ce que** la bande de ceinture (30) est tissée de fils de chaîne et de fils de trame (30a', 30a" ; 30b), au moins une cavité (52) dans laquelle est logé au moins un guide de lumière (10) s'étendant parallèlement aux fils de chaîne (30a', 30a"), la cavité (52) se trouvant à l'intérieur de la bande de ceinture (30).

9. Dispositif de ceinture de sécurité selon l'une quelconque des revendications 1 à 6, **caractérisé en ce que** la bande de ceinture (30) est tissée de fils de chaîne et de fils de trame (30a', 30a" ; 30b), au moins une cavité (52) dans laquelle est logé au moins un guide de lumière (10) s'étendant parallèlement aux fils de chaîne (30a', 30a"), la cavité (52) se trouvant sur un bord de la bande de ceinture (30).

10. Dispositif de ceinture de sécurité selon la revendication 9, **caractérisé en ce que** des cavités se trouvent sur les deux bords de la bande de ceinture.

11. Dispositif de ceinture de sécurité selon la revendication 10, **caractérisé en ce que** la bande de ceinture change de structure de tissage à l'endroit de la cavité.

12. Procédé pour la fabrication d'un dispositif de ceinture de sécurité pour un véhicule automobile, qui présente une bande de ceinture assemblée à un guide de lumière (10), qui est attachée au véhicule au moyen de dispositifs de fixation, un élément émetteur de lumière couplé optiquement au guide de lumière (10) et un élément sensible à la lumière, dans lequel la bande de ceinture (30) est tissée de fils de chaîne et de fils de trame (30a', 30a" ; 30b), dans lequel au moins une cavité (52) s'étend à l'intérieur de la bande de ceinture parallèlement aux fils de chaîne (30a', 30a"), dans laquelle est logé au moins un guide de lumière (10), **caractérisé en ce que**, pour réaliser ladite au moins une cavité (52), on tisse un faux guide de lumière (50) dans la bande de ceinture, ensuite on l'enlève et on introduit le guide de lumière (10) dans la cavité (52) qui subsiste.

13. Procédé selon la revendication 12, **caractérisé en ce que** le faux guide de lumière (50) présente un plus grand diamètre que le guide de lumière (10).
